(19) Europäisches Patentamt
European Patent Office
Office européen des brevets

(11) **EP 4 657 117 A1**

(12) **EUROPEAN PATENT APPLICATION**

(43) Date of publication:
03.12.2025 Bulletin 2025/49

(21) Application number: 25179770.0

(22) Date of filing: 30.05.2025

(51) International Patent Classification (IPC):
*G01S 13/74* (2006.01)      *G01S 13/87* (2006.01)
*G01S 13/46* (2006.01)

(52) Cooperative Patent Classification (CPC):
**G01S 13/74; G01S 13/46; G01S 13/878**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.05.2024 KR 20240071241

(71) Applicant: Korea Advanced Institute of Science
and Technology
Daejeon 34141 (KR)

(72) Inventors:
• KIM, Song Min
34141 Yuseong-gu, Daejeon (KR)
• BAE, Kang Min
34141 Yuseong-gu, Daejeon (KR)
• MOON, Hankyeol
34141 Yuseong-gu, Daejeon (KR)

(74) Representative: **Isarpatent**
**Patent- und Rechtsanwälte
Barth Hassa Peckmann & Partner mbB
Friedrichstraße 31
80801 München (DE)**

(54) **SUB-CM NLOS LOCALIZATION FOR MMWAVE BACKSCATTER**

(57) Disclosed herein is a localization system including: a tag array including one group of retro-reflective backscatter tags; and a radar system including a radar configured to output a radar signal and receive a plurality of groups of retro-reflective signals generated by the tag array reflecting the radar signal. The radar system is configured to determine the positions of one or more virtual radars of the radar reflected on one or more radio reflectors based on the propagation paths of the plurality of groups of retro-reflective signals, and is configured to determine the position of the tag array by a surveying method using the positions of the one or more virtual radars determined above.

FIG. 3

**Description**

BACKGROUND

1. Technical Field

The present invention relates to technology for localization using a radar and backscatter tags.
This research was supported by Samsung Future Technology Promotion Project [SRFC-IT2101-06].

2. Description of the Related Art

<MIMO Radar>

Multiple-Input Multiple-Output (MIMO) radar is a technique that enhances the angular resolution of mmWave radars. This is basically achieved by realizing a virtual antenna array with [the number of transmit antennas ($Tx_{ant}$)] $\times$ [the number of receive antennas ($Rx_{ant}$)] antennas. Time Division Multiplexing-MIMO (TDM-MIMO) radar is a widely used technique that implements MIMO radar by time-multiplexing transmissions between individual Tx antennas. Each Tx-Rx antenna combination experiences unique phase shifts (phase shafts according to the Angle of Arrival (AoA)) for the received signal due to the diverse path lengths. Consequently, the radar translates each Tx-Rx combination into a signal received at separate [$Tx_{ant}$] $\times$ [$Rx_{ant}$] Rx antennas (with a single Tx), thereby enhancing the AoA resolution.

<Hawkeye Localization>

The term "Hawkeye" mentioned herein refers to a mmWave backscatter ranging technique with sub-cm accuracy, which is a related art. Hawkeye may also be referred to herein as "the first mmWave backscatter ranging technique" or simply "the first ranging technique." The first ranging technique operates in LOS scenarios by utilizing the interplay between a frequency modulation tag and a commercialized radar to provide a signal-to-noise ratio (SNR) gain of 50 dB.
The SNR gain is subsequently converted into sub-cm accuracy. The present invention utilizes the first ranging technique to measure the tag range.

<Planar Van-Atta Array>

The Planar Van-Atta Array (VAA) is a passive antenna array structure that has retro-reflectivity in both the azimuth and elevation planes. The retro-reflectivity is achieved by inverting the phase sequence of the incident signal by the symmetric layout of antenna elements. In the planar VAA, the centrosymmetric antenna pairs are interconnected by transmission lines (TLs). In order to constructively flip the phase sequence at all antenna pairs, the differences between TLs are set to multiples of guided wavelength $\lambda$g, which is the wavelength of the electromagnetic wave in the dielectric substrate.
The precise localization of pervasively deployed devices is a key to accurate interaction and immersive services including smart spaces and augmented reality. Radio Frequency Identification (RFID) and backscatter localization, which have extremely low deployment and maintenance costs, have been extensively studied towards this goal. Among them, the majority of the studies focus on Line-of-Sight (LOS) scenarios in which there is a direct path between a backscatter tag and a reader. This essentially limits the applicable scenarios and service settings to open spaces indoors and outdoors or behind RF-penetrable materials such as paper boxes, glasses, and bottles. However, many practical indoor scenarios are filled with blockages and obstructions non-penetrable by RF (900 MHz, 2.4 GHz, and mmWave frequencies), including electronics (monitors and PCs), appliances (refrigerators and dryers), concrete walls/pillars, and metallic structures such as partitions, fences, shelves, and cabinets. This makes indoors heavily Non-Line-of-Sight (NLOS) and multipath-rich, incurring significant blind spots for LOS localization techniques alone.
There have been efforts for NLOS localization under the above-described blockages. While they have shown promising results, they commonly require environment profiling or manipulation to generate the multipath tailored to localization. According to one study, there is a problem in that 100 or more reference tags need to be deployed over the localization space to find and compare the multipath profile of each tag. According to another study, there is a problem in that two or more meta-surfaces with beam steering capability are required to find the tag position by means of trilateration. Such installation requirement limits the coverage while increasing the deployment costs, or even prohibits applications of the technologies. Furthermore, their performances are limited to decimeter-level accuracy.

**EP 4 657 117 A1**

SUMMARY

The present invention is directed to the provision of de a backscatter NLOS localization technology that operates in a stand-alone manner without any multipath environment profiling or manipulation.

The present invention is directed to the provision of a backscatter NLOS localization technology that achieves an accuracy of up to several millimeters in each of the x, y, and z directions.

The present invention is directed to the provision of technology that enables free tag placement by using a circularly polarized structure having a large field of view (FoV) in the yaw, pitch, and roll directions.

The present invention is directed to the provision of technology that enables application in various indoor environments by expanding the applicable range of backscatter localization so that it can operate in any complex environment.

The present invention essentially extends backscatter localization to complex environments, enabling a variety of indoor applications. One of the main features of the present invention is that it utilizes the highly directional, specularly reflected multipath mmWave features that generate a mirrored image of the actual radar. The image, called a virtual radar, is located on a virtual LOS path (an extension line connecting a tag to a reflector) where a tag array is precisely located. A triangular tag array having three retro-reflective 77 GHz backscatter tags according to the present invention may be designed to capture a multipath, virtual radar positions and a tag array position under an unknown arbitrary reflector.

According to one aspect of the present invention, there may be provided a localization system, including: a tag array including one group of retro-reflective backscatter tags; and a radar system including a radar configured to output a radar signal and receive a plurality of groups of retro-reflective signals generated by the tag array reflecting the radar signal. The radar system is configured to determine the positions of one or more virtual radars of the radar reflected on one or more radio reflectors based on the propagation paths of the plurality of groups of retro-reflective signals. Furthermore, the radar system is configured to determine the position of the tag array by a surveying method using the positions of the one or more virtual radars determined above.

In this case, the surveying method may be a geometric surveying method.

In this case, the geometric surveying method may be a trilateration surveying method.

In this case, the positions of the virtual radars may vary depending on the positions of the radio reflectors, the position of the radar, and the position of the tag array.

In this case, the radar system may be configured to determine the positions of three virtual radars of the radar reflected on three radio reflectors based on the propagation paths of the plurality of groups of retro-reflective signals, and may be configured to determine the position of the tag array by trilateration using the positions of the three virtual radars determined above.

In this case, the radar system may be configured to determine the position of the tag array by a surveying method using a plurality of positions including the determined positions of the one or more virtual radars and predetermined one or more radar positions.

In this case, the positions of the one or more virtual radars may be the mirror image positions of the radar reflected on the one or more radio reflectors when viewed from the position of the tag array.

In this case, the one or more radio reflectors may include three radio reflectors distinct from each other, and the number of positions of virtual radars of the radar determined by the three radio reflectors may be three.

In this case, the one group of retro-reflective backscatter tags may include three different retro-reflective backscatter tags. In this case, the radar system may determine the three-dimensional (3D) position of the tag array by a surveying method using the positions of the one or more virtual radars determined above.

In this case, the three retro-reflective backscatter tags may be arranged at the apexes of a triangular geometry.

In this case, the one group of retro-reflective backscatter tags may include two different retro-reflective backscatter tags. More specifically, the one group of retro-reflective backscatter tags may include only two different retro-reflective backscatter tags, and the two retro-reflective backscatter tags may be arranged at different points of the tag array. In this case, the radar system may determine the two-dimensional (2D) position of the tag array by a surveying method using the positions of the one or more virtual radars determined above.

In this case, the group of retro-reflective signals may be a plurality signals transmitted in a non-line-of-sight (NLOS) manner.

In this case, the group of retro-reflective signals may be a plurality signals each transmitted via any one of direct (line-of-sight (LOS)) and reflected (NLOS) paths of radio waves formed between the radar and the tag array.

In this case, the geometry between the plurality of retro-reflective backscatter tags may be stored in the radar system. Furthermore, the radar system may be configured to reconstruct the geometry between the plurality of retro-reflective backscatter tags based on a first group of retro-reflective signals selected from among the plurality of groups of retro-reflective signals received by the radar, and may be configured to determine the selected first group of retro-reflective signals to be retro-reflective signals each following an NLOS path between the radar and the tag array only when the reconstructed geometry satisfies a first condition determined in advance.

In this case, the signals received by the radar may be divided into retro-reflective signals each following an LOS path between the radar and the tag array and retro-reflective signals each following an NLOS path between the radar and the tag array, and at least one group of retro-reflective signals out of the plurality of groups of retro-reflective signals may be retro-reflective signals each following the NLOS path.

In this case, the first condition may be a condition in which the reconstructed geometry is different from the stored geometry.

In this case, when the first condition is satisfied but the signal intensity of the selected first group of retro-reflective signals is lower than a predetermined threshold value, the selected first group of retro-reflective signals may not be used to determine the position of the tag array.

In this case, the radar system may be configured to determine the selected first group of retro-reflective signals to be retro-reflective signals each following an LOS path between the radar and the tag array when the first condition is not satisfied.

In this case, the one group of retro-reflective backscatter tags may include three retro-reflective backscatter tags assigned different tag IDs. Furthermore, the three retro-reflective backscatter tags may be configured to generate their own retro-reflective signals corresponding to radar signals incident on them so that the retro-reflective signals generated by them include information about their own tag IDs. Furthermore, the selected first group of retro-reflective signals may be signals that have passed through the same path, and may include three retro-reflective signals generated by the three retro-reflective backscatter tags. Furthermore, the radar system may be configured to reconstruct the geometry between the three retro-reflective backscatter tags based on the tag IDs included in the selected first group of retro-reflective signals.

In this case, the one group of retro-reflective backscatter tags may include three retro-reflective backscatter tags assigned different tag IDs. Furthermore, the three retro-reflective backscatter tags may be configured to generate their own retro-reflective signals corresponding to radar signals incident on them so that the retro-reflective signals generated by them include information about their own tag IDs. Furthermore, the selected first group of retro-reflective signals may be signals reflected on the same radio reflector, and may include three retro-reflective signals generated by the three retro-reflective backscatter tags. Furthermore, the radar system may be configured to reconstruct the geometry between the three retro-reflective backscatter tags based on the tag IDs included in the selected first group of retro-reflective signals and the difference between the paths along which the three retro-reflective signals generated by the three retro-reflective backscatter tags reach the radar system.

In this case, the three retro-reflective backscattering tags may use different modulation parameters to generate the three retro-reflective signals in order to include information about different tag IDs in the three retro-reflective signals.

In this case, the first condition may be a condition in which the values of the tag IDs of the three retro-reflective backscatter tags reconstructed by the radar system based on the selected first group of retro-reflective signals increase along one of the clockwise and counterclockwise directions.

In this case, the path of the radar signal reaching the tag array and the path of the retro-reflective signals reflected by the tag array may be the same, and their directions may be opposite.

In this case, each of the retro-reflective backscatter tags may be configured to retro-reflect incident radio waves in any yaw, pitch, and roll directions.

In this case, each of the retro-reflective backscatter tags may include N*M/2 pairs of centrosymmetric CP antennas arranged in an N*M matrix form. Furthermore, a first centrosymmetric CP antenna constituting any of the centrosymmetric CP antenna pairs may have one end of a modulation unit connected thereto, one end of a transmission line (TL) may be connected to the other end of the modulation unit, and a second centrosymmetric CP antenna constituting the any of the centrally symmetric CP antenna pairs may be connected to the other end of the transmission line.

In this case, N and M may be natural numbers, and at least one of N and M may be an even number.

In this case, the modulation unit may be a Frequency Shift Keying (FSK) modulation unit.

In this case, the difference in length between two different transmission lines included in each of the retro-reflective backscatter tags may be a multiple of the electromagnetic wavelength $\lambda_g$ of a dielectric substrate constituting the retro-reflective backscatter tag.

In this case, the radar may be configured to transmit the radar signal in a TDM-MIMO manner, and the one group of retro-reflective backscatter tags may be all configured to perform Frequency Shift Keying (FSK) modulation at an integer multiple of a predetermined unit modulation frequency $f_{m,0}$.

In this case, different tags may be configured to perform FSK modulation at different integer multiples of the unit modulation frequency $f_{m,0}$.

In this case, the one group of retro-reflective backscatter tags may be configured to perform FSK modulation at the same integer multiple of the unit modulation frequency $f_{m,0}$.

In this case, a via fence may be formed between two adjacent transmission lines out of the N*M/2 transmission lines included in the N*M/2 pairs of centrosymmetric CP antennas.

In this case, each of the centrosymmetric CP antennas may have a truncated-corner patch antenna structure.

According to another aspect of the present invention, there may be provided a localization system including: a tag array including one group of retro-reflective backscatter tags; and a radar system configure to output a radar signal by using a radar and receive a plurality of groups of retro-reflective signals generated by the tag array reflecting the radar signal. The radar system is further configured to determine the positions of one or more virtual radars of the radar reflected on one or more radio reflectors based on the propagation paths of the plurality of groups of retro-reflective signals, and is further configured to determine the position of the tag array by a surveying method using the positions of the one or more virtual radars determined above.

In this case, the radar system may include: a first radar configured to output a first radar signal and receive a first group of retro-reflective signals generated by the tag array reflecting the first radar signal; a second radar configured to output a second radar signal and receive a second group of retro-reflective signals generated by the tag array reflecting the second radar signal; and a third radar configured to output a third radar signal and receive a third group of retro-reflective signals generated by the tag array reflecting the third radar signal. Furthermore, the radar system may be configured to determine a mirror image position of a first virtual radar of the first radar reflected on the radio reflector, a mirror image position of a second virtual radar of the second radar reflected on the radio reflector, and a mirror image position of a third virtual radar of the third radar reflected on the radio reflector based on propagation paths of the first group of retro-reflective signals, the second group of retro-reflective signals, and the third group of retro-reflective signals, and is configured to determine a position of the tag array by trilateration using the three determined mirror image positions.

According to the present invention, there may be provided the backscatter NLOS localization technology that operates in a stand-alone manner without multipath environment profiling or manipulation.

According to the present invention, there may be provided the backscatter NLOS localization technology that achieves an accuracy of up to several millimeters in each of the x, y, and z directions.

According to the present invention, there may be provided the backscatter NLOS localization technology that achieves an accuracy of up to 0.07° in the yaw, pitch, and roll directions.

According to the present invention, there may be provided the technology that enables the free placement of a tag having a circular polarization structure by using a circular polarization structure having a large field of view (FoV) in the yaw, pitch, and roll directions.

According to the present invention, there may be provided the technology that enables application in various indoor environments by expanding the applicable range of backscatter localization so that it can operate in any complex environment.

According to the present invention, there may be enabled the accurate NLOS localization that can be widely applied to various and complex indoor environments having any reflectors and obstacles.

According to the present invention, there may be provided the NLOS backscatter localization technology that operates with an accuracy of less than cm in a range of 8 m.

According to the present invention, there may be provided the NLOS backscatter localization technology that operates in a stand-alone manner without multipath environment profiling or manipulation.

BRIEF DESCRIPTION OF THE DRAWINGS

The above and other objects, features, and advantages of the present invention will be more clearly understood from the following detailed description taken in conjunction with the accompanying drawings, in which:

FIG. 1 illustrates the concept of a triangular tag array provided according to one aspect of the present invention;
FIG. 2 illustrates the concept in which individual tags in the triangular tag array are trilaterated directly by three radars for localization in an LOS environment;
FIG. 3 illustrates the concept of deploying three virtual radars by using reflectors so that trilateration can be applied for NLOS precise localization according to the present invention;
FIG. 4 illustrates the concept of formulating the position of a virtual radar using the AoA;
FIG. 5 illustrates the position of a virtual radar in relation to the geometry and orientation of a tag array;
FIG. 6(a) is a diagram illustrating that an equation cannot be solved in the absence of retro-reflectivity because a signal follows random paths from an unknown number of reflectors;
FIG. 6(b) is a diagram illustrating that weak specularity (i.e., scattering) blurs the image of a virtual radar to cause localization inaccuracy;
FIG. 7 illustrates a tag prototype in which the combination of a $4 \times 4$ planar VAA and a circularly polarized (CP) antenna collectively offers high retro-reflectivity in any yaw, pitch, and roll orientations;
FIG. 8 illustrates the comparison of the measured normalized monostatic RCS of a tag provided according to one embodiment of the present invention with that of a simulated equal-sized flat plate;
FIG. 9 is a diagram illustrating that a rough surface may generate additional scattering in addition to a specular signal;
FIG. 10(a) illustrates the shunt configuration of a tag provided according to one embodiment of the present invention, in which a PIN diode reflects (i.e., isolates) signal flow under a forward bias;

FIG. 10(b) illustrates an equivalent circuit of a modulator provided according to one embodiment of the present invention and located between antenna pairs;

FIG. 10(c) illustrates an empirically measured phase shift throughout the 77 GHzband;

FIG. 11 illustrates the concept of projecting tags in a counterclockwise array in an LOS path, while single-reflector paths project tags in a clockwise array as a result of image flipping;

FIG. 12(a) illustrates a single-radar setup and its corresponding DOP for NLOS localization according to the present invention;

FIG. 12(b) illustrates that a multi-radar setup may be utilized for accuracy enhancement in scenarios in which the spatial diversity of virtual radars is severely limited;

FIG. 13 illustrates the concept of compensating phase by adjusting the transmission interval according to the present invention, achieving the maximum SNR by;

FIG. 14(a) illustrates an antenna response of -10 dB throughout the overall 77 GHz band, and FIG. 14(b) illustrates the axial ratio for circular polarization (i.e., the ratio between two orthogonal polarizations);

FIG. 15 illustrates the measured retro-reflectivity of a tag with a via fence and the measured retro-reflectivity of a tag without a via fence;

FIG. 16(a) shows the appearance of a tag having a control board using a coin cell battery; and

FIG. 16(b) shows an equivalent circuit of the control board presented in FIG. 16(a).

DETAILED DESCRIPTION

Embodiments of the present invention will be described in detail below with reference to the accompanying drawings. However, the present invention is not limited to the embodiments described herein, and may be implemented in various other forms. The terms used herein are intended to assist in understanding the embodiments, but are not intended to limit the scope of the present invention. Furthermore, the singular forms used below may further include plural forms unless the phrases clearly indicate the opposite meaning.

The term 'reflector' below refers to a radio reflector (i.e., a reflector for radio waves) that reflects radio waves radiated from an antenna, etc.

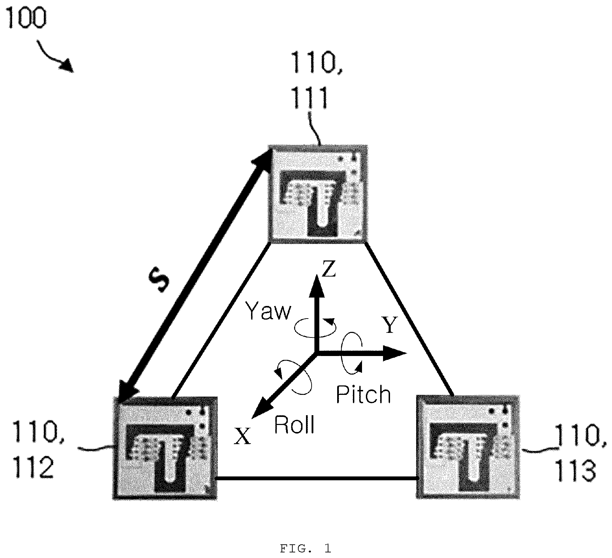

FIG. 1 shows the concept of a triangular tag array 100 provided according to one embodiment of the present invention.

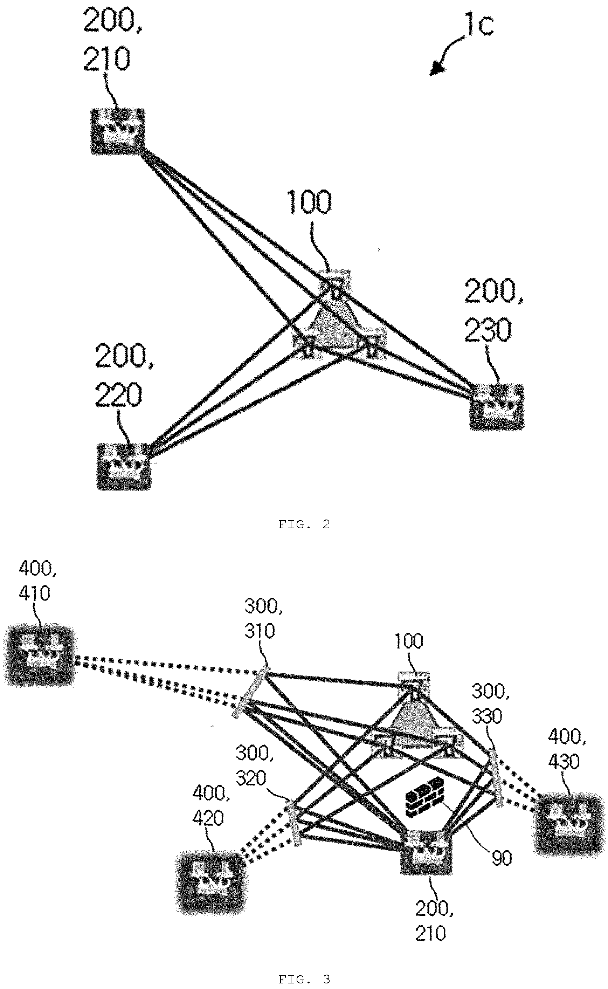

FIG. 2 shows the concept in which individual tags 110 in the triangular tag array 100 are trilaterated directly by three radars 210, 220 and 230 for localization in an LOS environment.

A method provided according to one embodiment of the present invention includes the step of distinguishing between LOS and NLOS paths that are detected only through the geometry of the tag array 100. In the case of the LOS path, a known LOS localization method is substituted. Among others, the performance of the method according to the present invention heavily depends on two factors: the quality of the multipath signal, and the spatial diversity between signals. For multipath quality, the present invention designs tags at 77 GHz spectrum with 4 GHz wide bandwidth for the fine-grained filtering of the noise from the scatter effects, and also maintains the cost at 32 USD (97% cutdown) with a shunt structure. The present invention supports both single and multi-radar setups, where the latter improves the performance with higher multipath spatial diversity and offers wider coverage at the cost of higher deployment cost.

The technology provided by the present invention was evaluated in a hallway and office space by using six reflectors including metal, concrete, and plaster, and it was found that an NLOS 3D localization accuracy of up to 8.3 mm could be achieved.

The present invention is directed to an accurate NLOS localization design that is widely applicable to various complex indoor settings with arbitrary reflectors 300 and blockages 90. The NLOS backscatter localization technology provided according to the present invention operates over 8 m range with sub 1 cm accuracy, and may operate in a stand-alone manner without multipath environment profiling or manipulation.

<NLOS Localization>

According to the present invention, by using a tag array 100 and uniquely utilizing its geometry, localization may be achieved using commercialized radars 200 without multipath environment profiling or manipulation under a non-penetrable NLOS environment. More specifically, the equilateral triangular tag array (hereafter, the tag array) 100 of FIG. 1 equipped with three retro-reflective tags 111, 112 and 113 may be utilized. It may be assumed that the tag array 100 is attached to a target of interest and the center of gravity thereof is localized as a target position. According to the present invention, sub-cm, 8.3 mm 3D localization accuracy may be achieved with an array size of $s = 40$ cm. Furthermore, from relative tag positions, this yields the sub-1°, high-precision orientation of the array, offering precise 6DoF.

FIG. 3 shows the concept of deploying three virtual radars 410, 420 and 430 by using the reflectors 300 so that trilateration can be applied for NLOS precise localization according to the present invention. This may be achieved without prior knowledge of the positions of the reflectors 300.

In comparison, FIG. 2 shows the LOS localization method of the tag array 100 through the simple trilateration of the three radars 210, 220 and 230 whose positions are already known.

The NLOS localization method according to the present invention uses the retro-reflective tags 110 and utilizes the multipath signal that generates the mirror image 400 of the radar 200 from the reflectors 300. More specifically, the present invention utilizes a multipath (i.e., two reflections in the back and forth directions) bounced off of a single reflector 300. In the present invention, the multipath is referred to as a single-reflector path, where the mirror image 400 from it is termed a virtual radar. That is, in the NLOS localization technology provided according to the present invention, the three virtual radars 410, 420 and 430 replace the three radars 210, 220 and 230 in the LOS case. This is presented in FIG. 3. The present invention may precisely localize the array under complex NLOS settings, commonly found in real life with many reflectors 300 and obstacles 90, by using the virtual radars 410, 420 and 430.

The positions of the virtual radars 400 are unknown a priori as they are dependent on the arbitrary reflectors 300 in a given environment. The present invention overcomes this problem. By uniquely utilizing the geometry of the tag array 100 and uncontrolled multipath signals from the ambient environmental reflectors 300, the present invention yields the accurate positions of the virtual radars 400 without any multipath environment profiling or manipulation. From this, the present invention may achieve the sub-cm, sub-1° NLOS 6DoF localization of the array 100. In the following, the technical details of obtaining the positions of the virtual radar 400 from the multipath reflections will be discussed.

In the present invention, the AoA of the tag signal combined with the geometry of the tag array 100 is utilized to determine the accurate position of the virtual radar 400 that is determined by the position of the reflector 399. In other words, from the viewpoint of a system-of-equations, by finding nine equations corresponding to *x, y,* and *z* coordinates of three virtual radars 300, the 6DoF of the tag array 100 and three radar-reflector ranges *r* (total of nine unknowns) may be computed. More specifically, the system of equations is formulated by comparing the expression of the positions of the virtual radars 300 using the AoA with the expression using the geometry of the tag array.

<Virtual Radar Position $\mathbf{P_v}$ Using AoA>

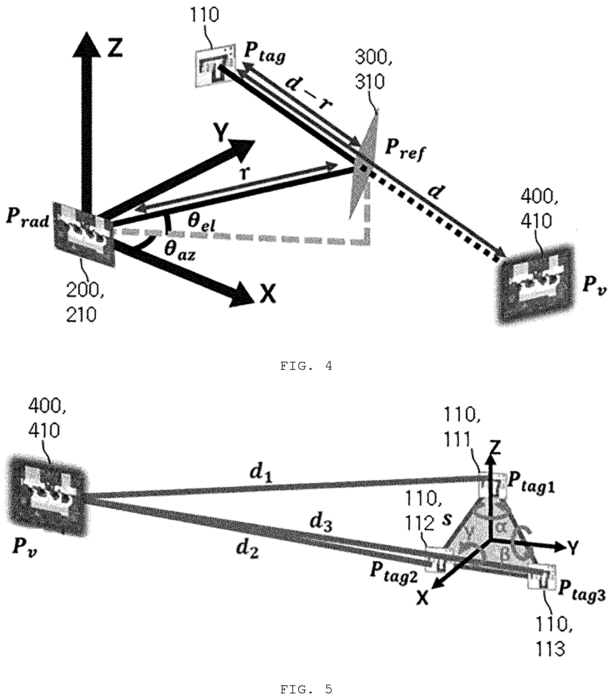

FIG. 4 illustrates the concept of formulating the position $\mathbf{P_v}$ of the virtual radar by utilizing the AoA.

In the present specification, the position of the real radar 210 is denoted by $\boldsymbol{P_{rad}}$, $\theta_{az}$ and $\theta_{el}$ denote the AoAs in the azimuth and elevation planes, and $\boldsymbol{d}$ and $\boldsymbol{r}$ denote the virtual radar-tag and radar-reflector ranges, respectively.

$\boldsymbol{d}$ may be measured with the recent mmWave backscatter ranging technique, whereas $\boldsymbol{r}$ depends on the environment and hence is unknown. The positions of the reflector 310 and the tag 110 in 3D are $\boldsymbol{P_{ref}}$ and $\boldsymbol{P_{tag}}$, respectively. By utilizing the relationship between the tag 110, the reflector 310, and the virtual radar 410 where they are on a line at the distance ratio of $\boldsymbol{d - r : r}$, the position of the virtual radar 410 is represented by Equation 1 below:

$$P_v = \frac{dP_{ref} - rP_{tag}}{d - r} \tag{1}$$

where $\boldsymbol{P_{ref}}$ may be represented by Equation 2 based on trigonometry from FIG. 4.

$$P_{ref} = P_{rad} + \begin{bmatrix} cos(\theta_{el})cos(\theta_{az}) \\ cos(\theta_{el})sin(\theta_{az}) \\ sin(\theta_{el}) \end{bmatrix} \tag{2}$$

Equation 1 does not include the orientation of the reflector 310. In FIG. 4, $\boldsymbol{P_{ref}}$ is located on the line connecting $\boldsymbol{P_v}$ and $\boldsymbol{P_{tag}}$, where the ratio of $\boldsymbol{d}$ and $\boldsymbol{r}$ and the position $\boldsymbol{P_{rad}}$ uniquely define the orientation of the reflector 310. This eliminates the orientation of the reflector 310 from the equation presented in the present invention.

<Virtual Radar Position $\mathbf{P_v}$ Using Tag Array Geometry>

FIG. 5 illustrates the virtual radar position $\boldsymbol{P_v}$ in relation to the tag array geometry and orientation. From the tag-radar range measurements, the virtual radar position through trilateration from the three tags is represented by Equation 3:

$$|P_v - P_{tag1}| = d_1 \ , \ |P_v - P_{tag2}| = d_2 , \ |P_v - P_{tag3}| = d_3 \tag{3}$$

where $\boldsymbol{d_1}, \boldsymbol{d_2},$ and $\boldsymbol{d_3}$ denote the ranges between the radar 410 and a first tag 111 $\boldsymbol{P_{tag1}}$, a second tag 112 $\boldsymbol{P_{tag2}}$, and a third

tag 113 $P_{tag3}$, respectively. The positions $P_{tag2}$ and $P_{tag3}$ of the tags may be rewritten with $P_{tag1}$ by using the spacing s between the tags 110 (Equation 4).

$$P_{tag2} = P_{tag1} + R(\alpha, \beta, \gamma) \begin{bmatrix} -\frac{s}{2} & -\frac{s\sqrt{3}}{2} & 0 \end{bmatrix}^T$$

$$P_{tag3} = P_{tag1} + R(\alpha, \beta, \gamma) \begin{bmatrix} \frac{s}{2} & -\frac{s\sqrt{3}}{2} & 0 \end{bmatrix}^T \qquad (4)$$

where $\alpha$, $\beta$, and $\gamma$ are the yaw, pitch, and roll of the tag array 100, and $(\alpha, \beta, \gamma)$ is the corresponding rotation matrix. By substituting Equation 4 into Equation 3 and solving for $P_v$, Equation 5 may be obtained.

$$P_v = P_{tag1} + R(\alpha, \beta, \gamma) \begin{bmatrix} \frac{d_2^2 - d_3^2}{2s} \\ -\frac{2d_1^2 - d_2^2 - d_3^2 + 2s^2}{2\sqrt{3}s} \\ \frac{\sqrt{-d_1^2(d_1^2 - d_2^2 - d_3^2 - s^2) - d_2^2(d_2^2 - d_3^2 - s^2) - d_3^2(d_3^2 - s^2) - s^4}}{\sqrt{3}d} \end{bmatrix} \qquad (5)$$

Finally, when equations are established by comparing the expression for $P_{ref}$ in Equation 1 with the expression for $P_{ref}$ in Equation 5, the system of equations for $\alpha$, $\beta$, $\gamma$, $P_{tag1}$, and $r$ of the tag array 100 may be solved. Particularly, as $P_v$ is a $IR^{3\times1}$ vector, three equations are obtained for each virtual radar 400. The three virtual radars 400 yield a total of nine linearly independent equations from which all the nine variables achieving the goal of NLOS tag array localization, i.e., tag array orientation $\alpha$, $\beta$, and $\gamma$, three radar-reflector ranges $r1$, $r2$, and $r3$, and the 3D position $P_{tag1}$ of the first tag $Tag1$, are found. So far, the NLOS localization method using the single radar 210 has been described in the present invention for the sake of simplicity. The multiple radars 210, 220 and 230 may be utilized to improve localization accuracy with radar spatial diversity.

<Creating Clear Virtual Radar Image>

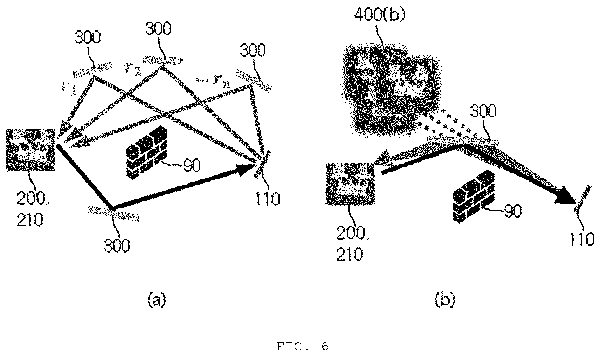

FIG. 6(a) is a diagram illustrating that an equation cannot be solved in the absence of retro-reflectivity because a signal follows random paths from an unknown number of reflectors.

FIG. 6(b) is a diagram illustrating that weak specularity (i.e., scattering) blurs the image of a virtual radar to cause localization inaccuracy.

The present invention utilizes the mmWave characteristics of high directionality and specularity for accurate localization. Particularly, as demonstrated in FIG. 6(a), retro-reflectivity is a key to NLOS localization - identical Tx and Rx paths ensure a single reflector per virtual radar. This limits the unknown to a single $r$ in Equation 1, making the system of equations solvable. In contrast, without retro-reflectivity, the signals take random paths from an unknown number of reflectors, or equivalently, an unknown number of $r$'s (i.e., $r1$, $r2$,...). In the following, the tag according to the present invention that provides robust retro-reflectivity in practical scenarios will be described in detail.

<All-Orientation Retro-Reflectivity>

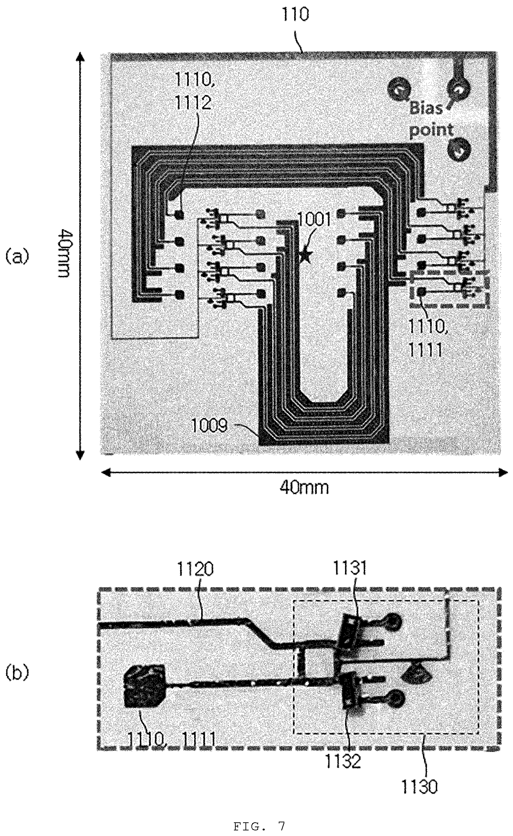

FIG. 7 illustrates a tag prototype in which the combination of a 4 × 4 planar VAA and a circularly polarized (CP) antenna collectively offer high retro-reflectivity in any yaw, pitch, and roll orientations.

FIG. 7(a) is an enlarged view of a tag 110 optimized for the 77 GHz band. Centrosymmetric circular polarized (CP) antenna pairs 1111 and 1112 achieve retro-reflectivity in all tag orientations.

FIG. 7(b) shows an enlargement of the dotted line area presented in FIG. 7(a).

The tag 110 may have dimensions of 40 mm and 40 mm in width and height, respectively.

The specific configuration of the tag 110 presented in FIG. 7 will be described in more detail later.

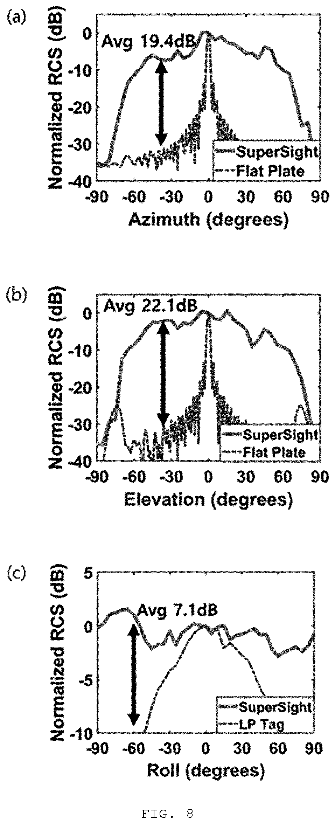

FIG. 8 shows the comparison of the measured normalized monostatic RCS of the tag 110 provided according to one embodiment of the present invention with that of a simulated equal-sized flat plate.

FIG. 8(a) shows the comparison in the azimuth (yaw) plane, and FIG. 8(b) shows the comparison in the elevation (pitch) plane. FIG. 8(c) shows the comparison of the measured monostatic RCS of the tag 110 according to the present invention with that of a linearly polarized (LP) tag in the roll orientation. For each orientation, the tag 110 according to the present invention achieves 115°, 130°, and 360° FoV (10 dB beamwidth).

As shown in FIGS. 8(a) and 8(b), the tag 110 according to the present invention achieves average beamforming gains of 19.4 dBand 22.1 dB in the azimuth and elevation planes, respectively. FIG. 8(c) demonstrates stable performance under roll with a loss of less than 2.8 dB. This comes from the CP antenna reducing the polarization mismatch loss by 7.1 dB compared to the linearly polarized antenna.

In order for the tag 110 according to the present invention to withstand reflection loss in addition to retro-reflectivity, one embodiment of the present invention improves the SNR by adopting the first ranging technique (Hawkeye) described above. According to the results empirically evaluated by the inventor, the 4 × 4 cm tag 110 according to the present invention achieves 30 dB SNR at a range of 6 m when reflected off common indoor building materials such as concrete, plaster, plywood, and metal.

<Highly Specular, Low-Cost Wideband Modulator>

The technology provided according to the present invention pinpoints the image of the virtual radar 400 by utilizing the specular reflection of mmWave in addition to the retro-reflectivity.

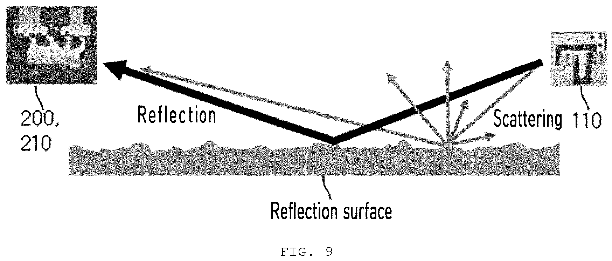

FIG. 9 is a diagram illustrating that a rough surface may generate additional scattering in addition to a specular signal.

As can be seen from FIG. 9, in practice, the specular signal is contaminated by scattering from the rough surface of the reflector. This blurs the image of the virtual radar and deteriorates the localization performance, as illustrated in FIG. 6(b).

The technology provided according to the present invention distinguishes a specular signal from scattering by selecting the largest peak within a cluster. This stems from the fact that the specular signal power dominates over scattering for the bands lower than 140 GHz and indoor materials. However, the difference in path length between the specular reflection and the scattering is known to be as short as 10 cm, corresponding to only 0.34 ns delay difference. This calls for a wide bandwidth of > 1.47 GHz to distinguish the two paths (i.e., they fall in separate taps). Insufficient bandwidth incurs significant NLOS localization error. For example, the 250 MHz bandwidth of 24 GHz band faces 1.9 cm ranging error from scattering alone, resulting in ≈ 0.19 m additional localization error.

The technology provided according to the present invention is designed to utilize the 4 GHz bandwidth at 77 GHz, under which the localization error is suppressed to sub-cm (2.2 mm) with the fine-grained time resolution of 0.125 ns (0.22 mm ranging error). The mmWave band provides significantly low diffraction power (20 dB lower than 900 MHz), collectively enabling the sub-cm NLOS localization.

The tag provided according to one embodiment of the present invention may use FSK modulation. In this case, building a modulator at 77 GHz covering the entire 4 GHz bandwidth incurs a high production cost of over 1,000 USD per tag, due to expensive RF switches operating at 77 GHz (100-300 USD per piece).

The tag provided according to the present invention vastly cuts down the cost by 97% by adopting shunt-connection with cheap PIN diodes (2 USD). The shunt configuration enables frequency-independent isolation of >10 dB with <10 Ω forward resistance. In other words, this enables switching without the high-cost 77 GHz parts.

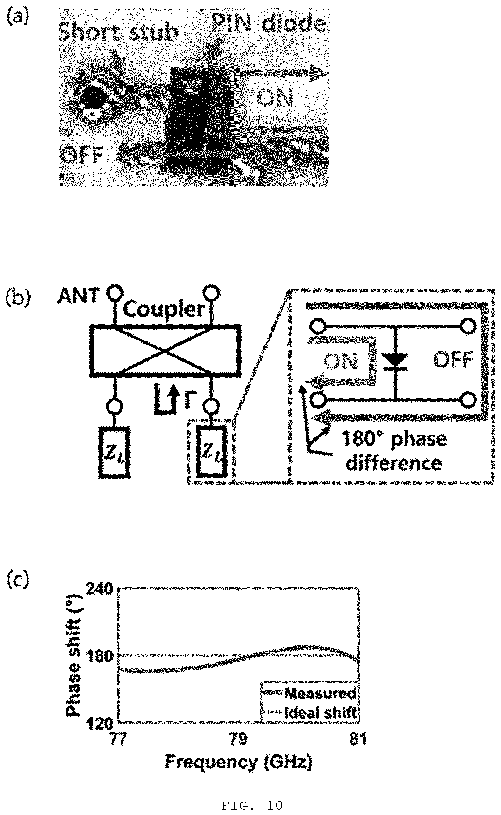

FIG. 10(a) shows the shunt configuration of a tag provided according to one embodiment of the present invention, in which a PIN diode reflects (i.e., isolates) signal flow under high bias (ON).

FIG. 10(b) shows an equivalent circuit of a modulator provided according to one embodiment of the present invention and located between antenna pairs. In this case, the PIN diode changes the reflection coefficient $\Gamma$ on ZL to yield 180° phase shift.

FIG. 10(c) illustrates an empirically measured phase shift throughout the 77 GHzband. The maximum error is only 14.3°, i.e., 1.6% power loss.

The following description will be made with reference to FIG. 10.

For the shunt connection, the tag provided according to one embodiment of the present invention adopts a $\lambda g/2$ short stub whose input impedance $z_{in} = 0$ (i.e., short), bringing a signal reflection (i.e., isolation) as shown in FIG. 10(a). FIG. 10(b) depicts an equivalent circuit of the quadrature coupler modulator designed to minimize the loss and maximize the SNR. More specifically, it performs low-loss FSK modulation via 180° phase shift with the minimum number of diodes by utilizing two diodes to manipulate the reflection coefficient, instead of the conventional method that switches between two TLs by utilizing four or more diodes. FIG. 10(c) shows the empirically measured phase flip with a maximum error of only 14.3° (i.e., [165.7°, 187.6°]), corresponding to a maximum 1.6% power loss, throughout the entire 4 GHz bandwidth in the 77 GHz spectrum.

<Method of Implementing Present Invention>

A method according to the present invention includes the step of distinguishing single-reflector paths.

The first step of the NLOS localization method provided according to the present invention is to distinguish the single-reflector paths from the LOS path. This does not require prior knowledge of the environment and is achieved by utilizing the triangular tag array (100) geometry (determined by the AoA).

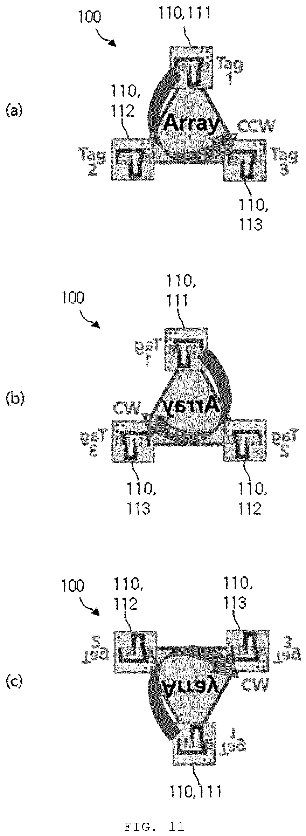

FIG. 11 illustrates the concept in which the LOS path projects in a counter-clockwise arrangement whereas the single-reflector paths project the tags in a clockwise arrangement as a result of the image flipping. The following description will be made with reference to FIG. 11.

In particular, the method provided according to one embodiment of the present invention distinguishes the LOS path from the single-reflector paths by utilizing the image flip accompanying each reflection. As shown in FIG. 11, in a scenario in which the tag IDs in the tag array increase counter-clockwise, the LOS (even reflector) path projects the geometry as-is, whereas the single-reflector (odd reflector) paths project clockwise geometry. This technique generally applies to both horizontal and vertical reflections. Finally, paths with two or more reflectors are filtered by their extremely low RSSI ($\approx$ 30 dB loss for the indoor channel) over LOS and single-reflector paths.

The second step of the NLOS localization method provided according to one embodiment of the present invention is a single/multi-radar setup step.

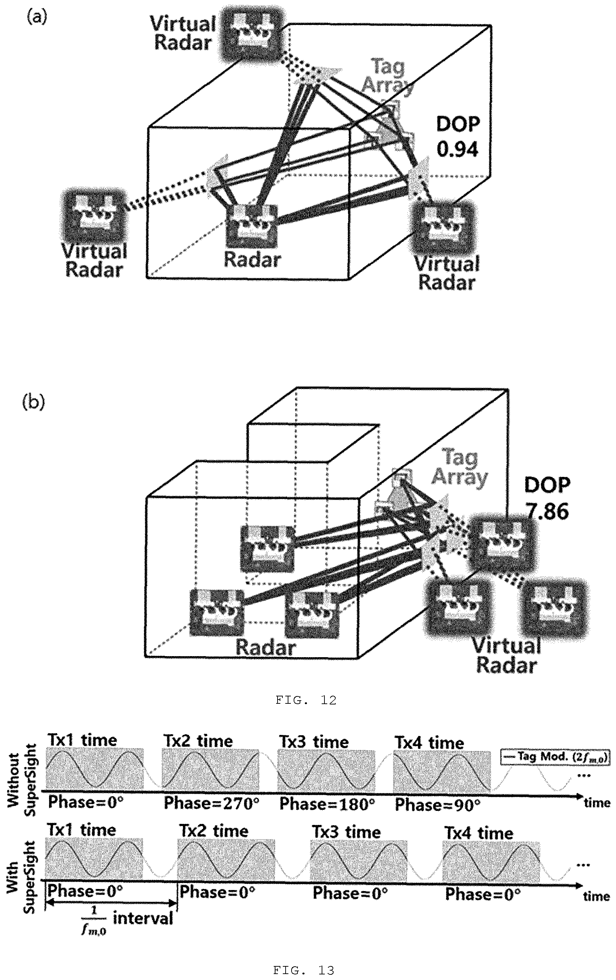

The method provided according to one embodiment of the present invention utilizes three virtual radars 410, 420 and 430 obtained from the abundant reflectors 300 including ambient furniture, walls, a ceiling, and a floor, as illustrated in FIG. 12(a). Even according to other studies, a single radar 210 is capable of providing three or more single-reflector paths in the mmWave band measured at 320 or more positions indoors.

Still another method according to the present invention deploys a multi-radar setup to improve the localization performance in the case of the insufficient spatial diversity of virtual radars, as shown in FIG. 12(b). Essentially, deploying additional radars 220 and 230 at different positions adds virtual radars 420 and 430 with enhanced spatial diversity. The performance gain from spatial diversity is explained with Dilution of Precision (DOP) from the Geomatics. In this case, a low DOP setup suppresses the impact of radar error on the localization accuracy in the present invention. The DOP is given by Equation 6:

$$DOP \propto \frac{SuperSight Accuracy}{Radar Accuracy} \tag{6}$$

FIG. 12(a) shows a single-radar setup for NLOS localization according to the present invention and its corresponding DOP. FIG. 12(a) shows a case where only one radar 210 is installed.

FIG. 12(b) illustrates that in scenarios in which the spatial diversity of virtual radars is severely limited, a multi-radar setup may be utilized to improve accuracy. FIG. 12(b) shows a case where three radars 210, 220 and 230 are installed.

FIG. 12(a) shows an example of a single radar setup with a DOP of 0.94.

As depicted in FIG. 12(b), by deploying the three radars 210, 220 and 230 at intervals of 0.6 m, the present invention achieves a DOP of 7.86 under the harshest scenario of utilizing a single reflector, enabling the sub-cm accuracy. In the case where the number of virtual radars exceeds three, the technology according to the present invention selects three radars with minimum DOP (i.e., best performance combination). The multi-radar setup is basically supported in the algorithm according to the present invention, simply by substituting the corresponding radar positions to $P_{rad}$ in Equation 2.

<Precision Enhancement Using MIMO Radar>

FIG. 13 illustrates the concept of compensating the phase by adjusting the transmission interval according to the present invention, thus achieving maximum SNR.

The present invention may improve the accuracy of the recent work of the first ranging technique (Hawkeye) by newly utilizing the TDM-MIMO technique through mmWave backscatter localization. This emulates a massive 144 Rx antenna (9 Tx $\times$ 16 Rx) on the commercialized radar, providing a significant SNR gain of higher than 20 dB (hence higher accuracy). In particular, an implementation according to one embodiment of the present invention achieves 102 $\mu$m radar-tag range and 0.071° AoA accuracies. This sub-mm range accuracy offers sub-cm performance in harsh environments with DOP as high as 10, and the sub-0.1° AoA accuracy yields the virtual radar position (see Equation 1) with sub-cm accuracy.

Applying TDM-MIMO faces challenges when combined with a backscatter tag 110. The time-multiplexed transmissions from each antenna undergo extra phase shift due to tag modulation, incurring phase mismatch between the multiplexed signals. In the present invention, a unit modulation frequency $f_{m,0}$ is specified to align the phases, so that all the tags 110 are modulated at integer multiples of the unit frequency. At the same time, the time interval of each antenna (i.e., a multiplexed signal) is adjusted to $1/f_{m,0}$, thereby compensating for the tag phase shift. FIG. 13 illustrates this. In this case, a tag modulated at $2f_{m,0}$ is phased-matched across all antennas with a transmission interval of $1/f_{m,0}$, achieving maximum SNR.

<Implementation>

A test-manufactured tag 110 according to one embodiment of the present invention may be implemented on a substrate with 8 mil thickness, with dielectric constant $\varepsilon_r$ = 3.55 and dissipation factor tan$\delta$ = 2.7 $\times$ 10$^{-3}$. The following description will be made with reference to FIG. 7.

The above tag 110 has a two-layer PCB structure, with the top layer having a circuit arrangement and the bottom layer acting as a ground. The above tag is based on a 4 $\times$ 4 plane VAA in which centrosymmetric antenna pairs (e.g., 1111 + 1112) are interconnected by TLs 1120.

Referring to FIG. 7(a), a total of 16 antennas 1110 are arranged in a 4 $\times$ 4 matrix structure around the origin 1001. The two antennas are a pair of antennas interconnected to each other by the TL 1120. Accordingly, there are a total of 8 antenna pairs and a total of 8 TLs in FIG. 7(a). The two antennas (e.g., 1111 and 1112) that constitute one antenna pair are arranged at positions symmetrical to each other around the origin 1001.

The two antennas (e.g., 1111 and 1112) constituting one antenna pair are interconnected to each other by a TL 1120 and modulator 1130 connected in series. The modulation method by the modulator 1130 may vary, but the modulator 1130 presented in FIG. 7 is an example that performs FSK modulation. FIG. 7(b) is an enlarged view of the area of the dotted line portion presented in FIG. 7(a).

To achieve retro-reflectivity, the length differences between the multiple different TLs 1120 are set to multiples of $\lambda_g$ = 2.303 mm (from 79 GHz, which is the center frequency of the SRR band). To minimize phase misalignment within the 4 GHz bandwidth, the length difference between the minimum TL and maximum TL of the tag provided according to the present invention may be restricted to 4.88 $\lambda_g$. This results in a phase misalignment of up to 88.9°, which prevents destructive interference between the antenna pairs.

According to the structure of the tag 110 provided according to one embodiment of the present invention, a truncated corner patch antenna 1110 for circular polarization is adopted on top of the VAA structure. The corner of this patch antenna 1110 is trimmed to generate two orthogonal linear polarization signals in phase quadrature. The patch dimensions and TLs are optimized to have 75$\Omega$ impedance to mitigate the high attenuation of the 77 GHz TL.

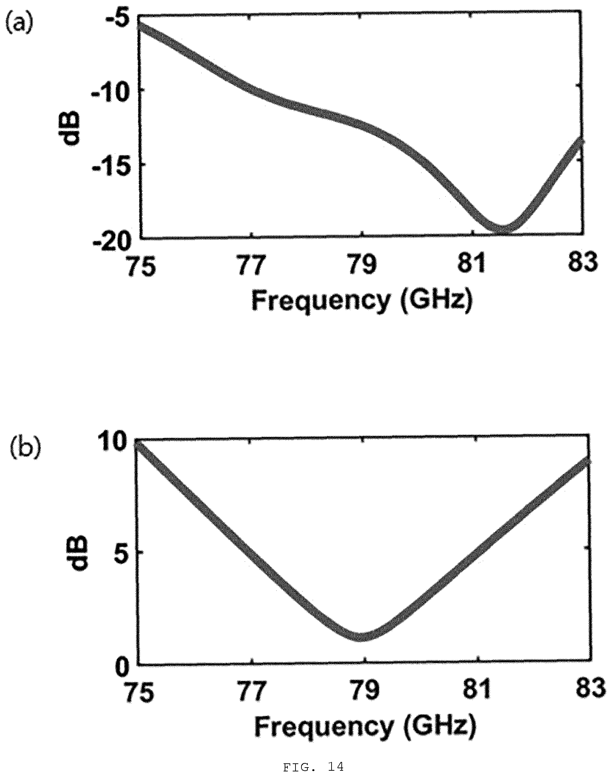

FIG. 14(a) depicts the antenna response of -10 dB throughout the 77 GHz band, and FIG. 14(b) shows the axial ratio (i.e., the ratio between two orthogonal polarizations) for circular polarization.

<Coupling Suppression>

The coupling (i.e., the crosstalk) between TLs deteriorates the phase alignment, thereby causing loss of retro-reflectivity. In particular, this becomes a crucial concern in 77 GHz backscatter because the power of the coupling effect increases with frequency. To mitigate coupling, the present invention adopts a via fence between densely deployed TLs, as shown in FIG. 7.

In one implementation, the via size may be selected as 0.2 mm and the via interval may be set to 0.35 mm, which is less than $\lambda_g$/4 so as to avoid leakage.

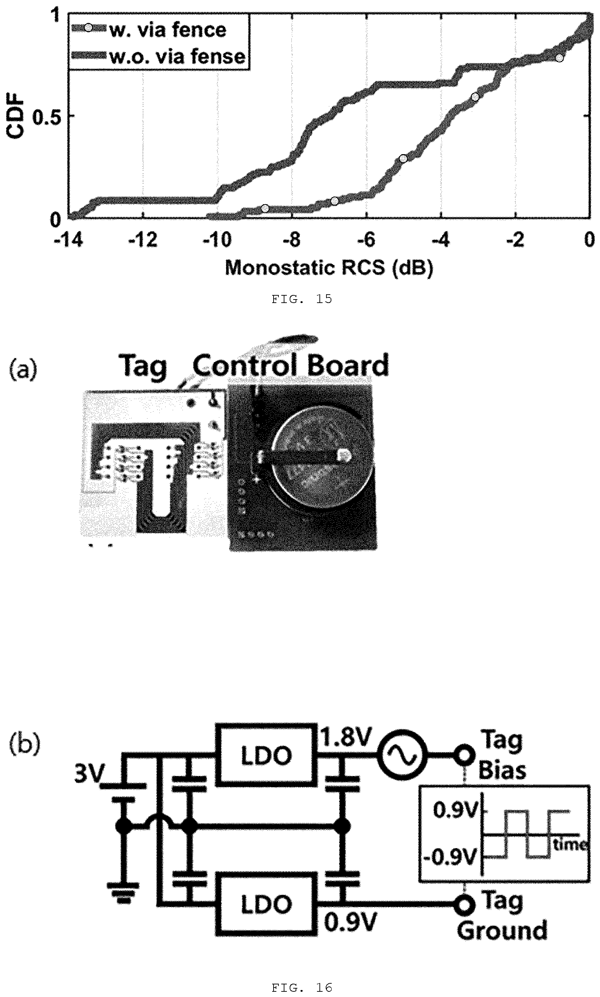

FIG. 15 shows the measured retro-reflectivity (within 10 dB beamwidth) of a tag with the via fence and a tag without the via fence. In this case, a via fence beamforming gain of 3.2 dB is observed. According to the data presented in FIG. 15, the via fence provides an average beamforming gain of 3.2 dB, effectively suppressing severe coupling in a 77 GHz circuit.

<Tag Power Consumption>

A tag according to one embodiment of the present invention equipped with full functionality for end-to-end power consumption analysis may be produced, and the end-to-end power consumption may be measured with a digital multimeter. The following description will be made with reference to FIG. 7.

The tag according to one embodiment of the present invention may utilize 16 PIN diodes. As shown in FIG. 7, one modulator 1130 included in one antenna pair (e.g., 1111 and 1112) includes two PIN diodes 1131 and 1132. Accordingly, a total of 16 PIN diodes are included in a total of 8 pairs of antennas included in the tag 110.

The diodes on the tag 110 operate at 0.9 V bias, in which case the measured current consumption is 10.15 $\mu$A (or the corresponding power consumption is 30.45 $\mu$W).

For the FSK modulation of the tag 110, in one embodiment of the present invention, a control board using a coin cell battery with a capacity of 1000 mAh may be utilized, as shown in FIG. 16(a). To minimize the power consumption of the control board, the present invention may utilize an ultra-low power oscillator providing a maximum current consumption of 10 $\mu$A in the frequency range of 1 to 462.5 kHz.

FIG. 16(b) shows an equivalent circuit of a control board provided according to the present invention. As the minimum input voltage of the oscillator (i.e., the amplitude of the oscillator output) is 1.62 V, the bias voltage (or the diode power consumption) may be reduced by utilizing two low-dropout regulators (LDOs). One of these LDOs may regulate the input voltage of the oscillator, and the other low-dropout regulator (LDO) may set the ground. Accordingly, the voltage difference between the two LDO outputs becomes the bias voltage. In this setting, the control board consumes 2.35 $\mu$A or 7.05 $\mu$W. In total, the tag according to the present invention consumes a power of 37.5 $\mu$W, which corresponds to a lifespan of 9.13 years based on one coin cell per tag. When the triangular tag array shares a single coin cell, the lifespan is reduced to 3.04 years.

In the above descriptions made with referenced to FIGS. 1 to 16, there has been described the technology for tracking the 3D coordinates of a tag array by using the tag array, composed of three tags that may be combined with a localization target, and a radar. This technology is enabled because it utilizes the geometry between the three tags. This may be referred to as a 3D localization technology in the present specification.

Even those skilled in the art may understand that the concept of the 3D localization technology described above can be extended to a technology that tracks at least the 2D coordinates of a tag array by using the tag array composed of only two tags and a radar. This is enabled because there is utilized the geometry in which the two tags are arranged at different positions within the tag array. This may be referred to as a 2D localization technology in the present specification.

In the case of the above 2D localization technology, the virtual radar position $P_v$ utilizing the AoA is the same as that of the above Equation 1. However, in this case, $P_{ref}$ is given as Equation 7, unlike Equation 2.

$$P_{ref} = r[cos(\theta) \quad sin(\theta)]^T \tag{7}$$

where $\theta$ is the 2D AoA.

A system of equations utilizing the tag geometry with tag spacing $s$ may be given as Equation 8 below:

$$\frac{d_1 P_{ref} - r_1 P_{tag1}}{d_1 - r_1} = P_{tag1} + R(\alpha) \begin{bmatrix} \frac{d_1^2 - d_2^2 + s^2}{2s} \\ \sqrt{d_1^2 - \frac{(d_1^2 - d_2^2 + s^2)^2}{4s^2}} \end{bmatrix} \tag{8}$$

Finally, when the equations are established by comparing the expression for $P_{ref}$ in Equation 7 with the expression for $P_{ref}$ in Equation 8, the respective 2D virtual radars provide two equations. The above 2D localization technology utilizes three virtual radars (six equations) to find solutions for six variables of $P_{tag,x}$, $P_{tag,y}$, $\alpha$, $r_1$, $r_2$, and $r_3$.

By using the embodiments of the present invention described above, those having ordinary skill in the art to which the present invention pertains may easily make various changes and modifications within the scope that does not depart from the essential characteristics of the present invention. The content of each of the attached patent claims may be combined with one or more other claims that do not have a citation relationship within the scope that can be understood through the present specification.

**Claims**

1. A localization system comprising:

   a tag array including one group of retro-reflective backscatter tags; and
   a radar system including a radar configured to output a radar signal and receive a plurality of groups of retro-reflective signals generated by the tag array reflecting the radar signal;
   wherein the radar system is configured to:

   determine positions of one or more virtual radars of the radar reflected on one or more radio reflectors based on propagation paths of the plurality of groups of retro-reflective signals; and
   determine a position of the tag array by a surveying method using the positions of the one or more virtual radars determined above.

2. The localization system of claim 1, wherein the radar system is configured to:

   determine positions of three virtual radars of the radar reflected on three radio reflectors based on the propagation paths of the plurality of groups of retro-reflective signals, and
   determine the position of the tag array by trilateration using the positions of the three virtual radars determined above.

3. The localization system of claim 1, wherein the radar system is configured to determine the position of the tag array by a surveying method using a plurality of positions including the determined positions of the one or more virtual radars and predetermined one or more radar positions.

4. The localization system of claim 1, wherein the positions of the one or more virtual radars are mirror image positions of the radar reflected on the one or more radio reflectors when viewed from the position of the tag array.

5. The localization system of claim 1, wherein the one group of retro-reflective backscatter tags include two or three different retro-reflective backscatter tags.

6. The localization system of claim 1, wherein each group of retro-reflective signals are a plurality of signals transmitted in a non-line-of-sight (NLOS) manner.

7. The localization system of claim 1, wherein each group of retro-reflective signals are a plurality of signals each transmitted via any one of direct (line-of-sight (LOS)) and reflected (NLOS) paths of radio waves formed between the radar and the tag array.

8. The localization system of claim 1, wherein:

   a geometry between the plurality of retro-reflective backscatter tags is stored in the radar system; and
   the radar system is configured to:

   reconstruct the geometry between the plurality of retro-reflective backscatter tags based on a first group of retro-reflective signals selected from among the plurality of groups of retro-reflective signals received by the radar; and
   determine the selected first group of retro-reflective signals to be retro-reflective signals each following an NLOS path between the radar and the tag array only when the reconstructed geometry satisfies a first condition determined in advance.

9. The localization system of claim 8, wherein the first condition is a condition in which the reconstructed geometry is different from the stored geometry,
   wherein the radar system is configured to determine the selected first group of retro-reflective signals to be retro-reflective signals each following an LOS path between the radar and the tag array when the first condition is not satisfied.

10. The localization system of claim 8, wherein:

   the one group of retro-reflective backscatter tags include three retro-reflective backscatter tags assigned different tag IDs;
   the three retro-reflective backscatter tags are configured to generate their own retro-reflective signals corresponding to radar signals incident on them so that the retro-reflective signals generated by them include information about their own tag IDs;
   the selected first group of retro-reflective signals are signals that have passed through a same path, and include three retro-reflective signals generated by the three retro-reflective backscatter tags; and
   the radar system is configured to reconstruct the geometry between the three retro-reflective backscatter tags based on the tag IDs included in the selected first group of retro-reflective signals.

11. The localization system of claim 1, wherein a path of the radar signal reaching the tag array and a path of the retro-reflective signals reflected by the tag array are identical, and their directions are opposite.

12. The localization system of claim 1, wherein:

   each of the retro-reflective backscatter tags includes N*M/2 pairs of centrosymmetric CP antennas arranged in an N*M matrix form; and
   a first centrosymmetric CP antenna constituting any of the centrosymmetric CP antenna pairs has one end of a modulation unit connected thereto, one end of a transmission line (TL) is connected to a remaining end of the modulation unit, and a second centrosymmetric CP antenna constituting the any of the centrally symmetric CP antenna pairs is connected to a remaining end of the transmission line.

13. The localization system of claim 1, wherein:

   the radar is configured to transmit the radar signal in a Time Division Multiplexing (TDM)-Multiple-Input Multiple-Output (MIMO) manner; and

the one group of retro-reflective backscatter tags are all configured to perform Frequency Shift Keying (FSK) modulation at an integer multiple of a predetermined unit modulation frequency $f_{m,0}$,

wherein different tags are configured to perform FSK modulation at different integer multiples of the unit modulation frequency $f_{m,0}$.

14. A localization system comprising:

a tag array including one group of retro-reflective backscatter tags; and

a radar system configured to output a radar signal by using a radar and receive a plurality of groups of retro-reflective signals generated by the tag array reflecting the radar signal;

wherein the radar system is further configured to:

determine positions of one or more virtual radars of the radar reflected on one or more radio reflectors based on propagation paths of the plurality of groups of retro-reflective signals; and

determine a position of the tag array by a surveying method using the positions of the one or more virtual radars determined above.

15. The localization system of claim 14,

wherein the radar system includes:

a first radar configured to output a first radar signal and receive a first group of retro-reflective signals generated by the tag array reflecting the first radar signal;

a second radar configured to output a second radar signal and receive a second group of retro-reflective signals generated by the tag array reflecting the second radar signal; and

a third radar configured to output a third radar signal and receive a third group of retro-reflective signals generated by the tag array reflecting the third radar signal; and

wherein the radar system is configured to:

determine a mirror image position of a first virtual radar of the first radar reflected on the radio reflector, a mirror image position of a second virtual radar of the second radar reflected on the radio reflector, and a mirror image position of a third virtual radar of the third radar reflected on the radio reflector based on propagation paths of the first group of retro-reflective signals, the second group of retro-reflective signals, and the third group of retro-reflective signals; and

determine a position of the tag array by trilateration using the three determined mirror image positions.

FIG. 1

200,
210

1c

100

200,
230

200,
220

FIG. 2

400,
410

300,
310

100

300,
330

400,
430

300,
320

400,
420

90

200,
210

FIG. 3

FIG. 4

FIG. 5

(a)

(b)

FIG. 6

FIG. 7

FIG. 8

200,
210

Reflection

Reflection surface

Scattering 110

FIG. 9

(a)

(b)

(c)

FIG. 10

FIG. 11

(a)

(b)

FIG. 12

FIG. 13

(a)

(b)

FIG. 14

FIG. 15

FIG. 16

Europäisches
Patentamt

European
Patent Office

Office européen
des brevets

**EUROPEAN SEARCH REPORT**

| Application Number |
|---|
| EP 25 17 9770 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/244374 A1 (SOLTANAGHAEI ELAHE [US] ET AL) 4 August 2022 (2022-08-04)<br>* abstract *<br>* paragraphs [0012], [0031] *<br>----- | 1-15 | INV.<br>G01S13/74<br>G01S13/87<br>G01S13/46 |

| | | | TECHNICAL FIELDS SEARCHED (IPC) |
|---|---|---|---|
| | | | G01S |

The present search report has been drawn up for all claims

| Place of search | Date of completion of the search | Examiner |
|---|---|---|
| Munich | 15 October 2025 | Alberga, Vito |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 9770

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2025

| Patent document cited in search report | Publication date | Patent family member(s) | Publication date |
|---|---|---|---|
| US 2022244374 A1 | 04-08-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 210106